# EUROPEAN PATENT SPECIFICATION

(11) **EP 2 827 558 B1**
(45) Date of publication and mention of the grant of the patent: **30.11.2016**
(21) Application number: 13306043.4
(22) Date of filing: 19.07.2013
(51) Int. Cl.: H04L 29/08, H04L 29/06

(54) **Automated metric weight tuning for multi-cost ALTO queries**
Automatisierte Metrikgewichtsabstimmung für ALTO-Anfragen mit mehreren Kosten
Réglage de poids métrique automatisé pour des requêtes Multi-Cost ALTO

(43) Date of publication of application: 21.01.2015
(73) Proprietor: ALCATEL LUCENT, 92100 Boulogne-Billancourt (FR)
(72) Inventor: Randriamasy, Sabine, 91620 Nozay (FR); Lafragette, Jean-Luc, 91620 Nozay (FR)
(74) Representative: Berthier, Karine

(56) References cited:
- WO-A1-2012/138817
- US-A1- 2011 295 942
- "3rd Generation Partnership Project; Technical Specification Group Services and System Aspects; Feasibility study on IP Multimedia Subsystem (IMS) based peer-to-peer content distribution services; Stage 2 (Release 12)", 3GPP STANDARD; 3GPP TR 23.844, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 22 June 2012 (2012-06-22), pages 1-41, XP050580730, [retrieved on 2012-06-22]

## Description

### FIELD OF THE INVENTION

The present invention relates to methods and systems for managing the quality-of-experience for content delivery applications.

### BACKGROUND OF THE INVENTION

Internet usage is increasing rapidly all over the globe and tends to be ubiquitous and accessible from various end-user devices, leading to an ever evolving data exchange, often downloading as much as uploading. Therefore, Internet services are expected to cope with mobility of end-users, massive service requests, and heterogeneous access technologies, while ensuring the best possible Quality-of-experience (QoE) to each user. QoE shall be regarded as the manner in which the user perceives the quality of an application session in terms, for example, of latency, bit rate, freeze or rebuffering, impaired audio/video frames, or application packet loss. More generally, QoE reflects the overall acceptability (i.e. sensation, perception, satisfaction) and opinion of users as they interact with the experienced service(s).

It follows that an accurate description of the qualitative performance of a content delivery application is more than ever of current interest for network operators. Such measure is particularly important for content delivery applications that are highly demanding on QoE. In fact, content delivery applications must often choose one or more suitable candidates from a selection of peers offering the same resource or service. The chosen candidate(s) for serving a user request has/have a direct impact on the experienced quality.

Accordingly, operators of application networks such as CDN endeavor to improve the QoE of their applications (such as video download or streaming) while transport network operators, i.e. Internet Service providers (ISPs), aim at minimizing the ever increasing transport costs induced by contemporary applications. The term "application", as used herein, is meant to include any service provided by at least a network endpoint over a communication network such as P2P applications, real-time communications, Content delivery networks, on-demand video services, files sharing, content downloading, multimedia streaming, IPTV, cloud-based applications, or virtual application involving several physical servers.

In this regard, IETF has proposed a method for Application-Layer Traffic Optimization (ALTO). The ALTO IETF client-server protocol provides applications with guidance to select target endpoint(s) (i.e. peers, hosts, or application servers) from a set of candidates that are able to provide a desired data resource. This guidance is based on parameters that affect performance and efficiency of the data transmission between the hosts (such as the topological distance). ALTO is a client-server protocol that allows selection of application endpoints (AEP) with respect to several possible cost metrics such as routing cost, hop-count or, more generally, any other metric that crucially impacts the user QoE and the ISP network resources usage. By AEP is meant here a server, a datacenter, a cache, a cluster of server, or more generally a source of a certain service and/or resource.

The publication "3rd Generation Partnership Project; Technical Specification Group Services and System Aspects; Feasibility study on IP Multimedia Subsystem (IMS) based peer-to-peer content distribution services; Stage 2 (Release 12)" discloses a systems for selecting an application endpoint to provide an application service receiver with an application service, this system comprising a look-up table configured for mapping an addressing identifier of the application service receiver to an access network type, said access network type pointing to a configuration of at least a metric weight factor, said metric weight factor being associated to an Application-Layer Traffic Optimization cost metric and intended for adjusting the value of this Application-Layer Traffic Optimization cost metric.

The document WO 2012/138817 discloses ALTO Information Services carrying a network map and cost map (for paths between network locations), wherein ALTO information services may query for costs and rankings based on endpoints. ALTO Request/response messages may be transmitted using HTTP. The ALTO server may be discovered using DNS.

ALTO is gaining traction among Internet Service providers (ISPs) as ALTO information abstracts their network topology and expresses their preferences with respect to routing costs and metrics impacting QoE such as hop-count, bandwidth and packet loss. Provision by ISPs of ALTO Costs on their topology via routing protocols is widely admitted and ALTO information is to be provided as well by CDN and Cloud providers or Data Center operators for their customers.

Which metrics to choose to select the (AEPs) is out of scope of the ALTO protocol and highly depends on their impact on the QoE of a given application. Another factor impacting the AEP selection and the influence of the selection metrics is the capabilities of the user equipment (UE) consuming the application resources in terms of network access and device capabilities.

Accordingly, when multiple metrics are used to evaluate EPs, a problem arises with regards to how to automate their weight setting especially when the UE conditions change.

Further, when the decision on metrics choice is centered on the AEP, the influence of each of these metrics on the QoE depends on factors such as network access capabilities or device capabilities that are User Endpoint related information.

Moreover, traffic trends such as peak hours are not necessarily considered during metric selection or in the metric values provided by ALTO.

Yet, ALTO may provide preferences among feasible application endpoints (AEPs) that can be registered in the ALTO Server. Nevertheless, it cannot support the unpredictable and voluminous information related to the conditions of the user equipments consuming the application resources.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Some embodiments provide methods and apparatus for implementing an End User centered decision mechanism integrated on the ALTO client side and automatically adapting the influence of the already chosen AEP selection metrics by tuning their weight.

Some embodiments provide methods and apparatus for automated AEP selection metrics with eventually different weights.

Some embodiments provide methods and apparatus for integrating a mechanism on the ALTO client side that automatically adapts the influence of AEP selection metrics (as End User centered add-on to Automated application metric selection system for Multi-Cost ALTO queries), while taking into account
- the multiplicity of application metrics needed for a reliable AEP selection;
- the diversity of user equipment and their related access capabilities,
- today's increase of inter access technology handovers either for 3G offloading purposes or due to user mobility;
- the fact that ALTO does not necessarily support time varying cost information.

Various embodiments relate to systems for selecting an application endpoint to provide an application service receiver with an application service, this system comprising a look-up table configured for mapping an addressing identifier of the application service receiver to an access network type, said access network type pointing to a configuration of at least a metric weight factor, said metric weight factor being associated to an Application-Layer Traffic Optimization cost metric and intended for adjusting the value of this Application-Layer Traffic Optimization cost metric.

In accordance with one broad aspect, the above systems further comprise
- an Application-Layer Traffic Optimization client configured for requesting from an Application-Layer Traffic Optimization server the value of the Application-Layer Traffic Optimization cost metric;
- a multi-criteria endpoint ranking module configured for selecting an application endpoint with respect to the adjusted cost metric values;
- a configuration module configured to specify the weight factor value of the metric weight factor and the Application-Layer Traffic Optimization cost metric to which is associated the metric weight factor. This configuration module is further configured to retrieve, from the Application-Layer Traffic Optimization server, the set of the supported Application-Layer Traffic Optimization metrics by this Application-Layer Traffic Optimization server.
- a database configured for storing the weight factor value of the metric weight factor and the Application-Layer Traffic Optimization cost metric to which is associated the metric weight factor. This database is further configured for storing the applicable timeframe of the weight factor value;
- a candidate application endpoint gathering module configured for gathering candidate application endpoints, this candidate application endpoints providing the application service to the application service receiver;

In accordance with one broad aspect, the access network type includes Wireless-Fidelity type, 3GPP type, Local area network type, satellite type.

Further, various embodiments relate to methods for selecting an application endpoint to provide an application service receiver with an application service, this method comprising a mapping step of an addressing identifier of the application service receiver to an access network type, the access network type pointing to a configuration of at least a metric weight factor, said metric weight factor being associated to an Application-Layer Traffic Optimization cost metric and intended for adjusting the value of this Application-Layer Traffic Optimization cost metric.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

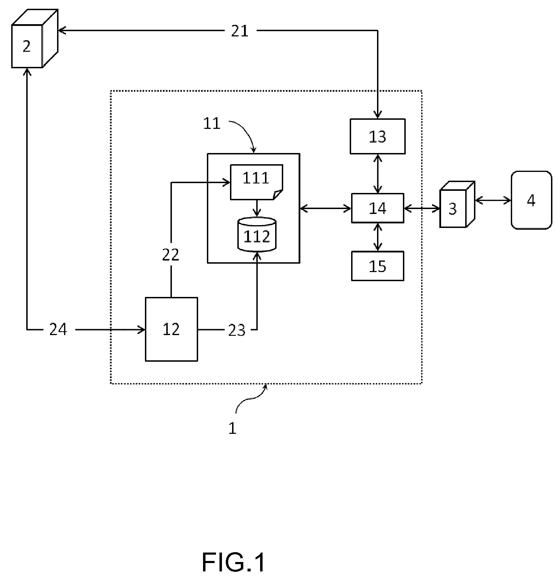

The objects, advantages and other features of various embodiments will become more apparent from the following disclosure and claims. The following non-restrictive description of preferred embodiments is given for the purpose of exemplification only with reference to the accompanying drawing in which FIG. 1 is a schematic diagram illustrating functional components according to various embodiments.

### DETAILED DESCRIPTION OF ILLUSTRATIVE EMBODIMENTS

Figure 1 shows the functional modules of a multi-cost ALTO client system 1 and its interactions with an ALTO server 2 and with a candidate AEP gathering module 3.

The ALTO server 2 provide, on request, cost metric values relating to given AEPs, as well as the set of supported ALTO metrics (ALTO Information Resources Directory).

The candidate AEP gathering module 3 is configured to gather candidate AEPs providing the requested application service to an application service receiver 4 (for example, a user equipment 4). Preferably, the candidate AEP gathering module 3 is managed by the ISP hosting the application service receiver 4. Advantageously, in this case, the ISP may directly communicate with the application service receiver (also called, Application resources Consuming User Equipment or ACUE) and determine to which access network type (i.e. WiFi, LAN, WLAN, 3GPP, Satellite) the IP address of the application service receiver 4 belong.

This candidate AEPs gathering module 3 may be, for example, a ISP DNS resolver, a function in the ISP network communicating with ACUEs and managing their access to resources in a cloud or a virtual network, or more generally any request routing system or any AEP tracker
- able to gather several IP addresses (or any other distinctive addressing identifier) of AEPs providing a certain application service to the application service receiver 4; and
- communicate with ACUEs and managing the access to resources in a communication network.

The multi-cost ALTO client system **1** comprises
- an Automated Metric Weight (AMW) mapping module **11** configured for online mapping the addressing identifier of the application service receiver **4** (i.e. the UE **4**) to an access network type pointing to a configuration of one or more cost metric weights. This AMW mapping module may be further configured for mapping candidate AEPs to a AMW configuration pointer pointing to one or more AEP selection metrics to be used as input to ALTO requests;
- an Automated Metric Weight (AMW) configuration module **12** for remote managing of the multi-cost ALTO client system **1.** The AMW configuration module **12** may be further configured to retrieve supported ALTO metrics by the ALTO server 2 (ALTO Information Resources Directory);
- an ALTO client **13;**
- an ALTO agent **14;**
- a multi-criteria EP ranking **15.**

The AMW mapping module **11** includes a look-up table **111** that maps an IP address @IP of a given application service receiver **4** to an access network type that points to a predefined configuration of one or more cost metric weights AMW_Config. Preferably, this configuration is done by the entity that administrates the candidate AEP gathering module **3,** such as the ISP as he knows the population in its domain of the different access types (i.e. the access network type such as WiFi, LAN, WLAN, 3GPP, Satellite) and their impact on the network conditions over time. The mapping of an addressing identifier to a configuration of cost metric weights may have the following form:
*{@UE}_1* = *LAN*/*WiFi* → *AMW_Config_1,*
*{@UE}_2* = *3GPP* → *AMW_Config_1,*
*{@UE}_N*= *Sat* → *AMW_Config_N,*

In this regard, the AMW module **11** gets the IP address of the receiver **4** of the requested application service via the ALTO Agent **14.** Based on the ISP knowledge of access network types based on the IP address, the look-up table **111** maps this addressing identifier to the pointer of a configuration of cost metric weights AMW_Config.

Moreover, the look-up table **111** may be configured for mapping a group of AEPs {@IP} to a metric configuration identifier AMM_Config that points to a set of cost metrics to be used as input to ALTO requests. This set of cost metrics may be specified by the entity managing the ALTO client **13,** while taking into account those supported by the serving ALTO server **2** (ALTO Information Resources Directory). The mapping of AEPs groups to metric configuration identifiers may have the following form:
*{@IP}_1* → *AMM*_*Config*_*1*,
*{@IP}_2* → *AMM_Config_2,*
*{@IP}_N* → *AMM_Config_N;*

A co-pending patent application entitled "automated application metric selection for multi-cost ALTO queries" filed by the same applicant, proposes an on-line method to automatically map a group of AEPs {@IP} to one or more selection metrics that are used as input to ALTO requests, since the decision on which ALTO metric to choose to evaluate the AEPs is outside of the ALTO protocol.

Alternatively, default cost metric(s) (for instance, manually configured) may be used as input to ALTO request.

Further, the AMW mapping module **11** comprises a database **112** called "AMW metric weight factor database" which stores the pointed weight factor values:
- a pointed value associated to an access network type may be the vector of all possible ALTO metrics used to evaluate AEPs with their associated weight factors;
- the component of this vector may also include the initial weight value set for example with respect to QoE needs.

For instance, the content of the AMW metric weight factor database **112** has the following form:
*AMW_Config_1*=*{metric_1, weight_1, weight_factor_1},*
*AMW_Config_2*=*{metric_2, weight_2, weight_factor_2},*
*AMW*_*Config*_*N*={*metric*_*1*, *weight*_*1*, *weight*_*factor*_*1*, *metric_2, weight_2, weight_factor_2},*

Given that a configuration value may change over time, the database **112** may further store other applicable values with their respective applicable timeframe (application schedule of these values).

The AMW mapping module **11** can of course be comprised within a user equipment, or more generally within an Application resources Consuming User Equipment (ACUE) and integrated in an augmented ALTO Client. Alternatively, the AMW mapping module **11** may be placed in an entity that has a visibility on the capabilities of the ACUE.

The ALTO Client **13** is configured
- to request, from the ALTO server **2,** values for a plurality of cost metrics to evaluate one or more AEPs. The number of cost metrics may depend on the application service performed at the AEP, and/or on time. Preferably, ALTO metrics are to be requested in the "numerical" mode so as to obtain effective values (rather than ranks in the case of the "ordinal" mode);
- this can be performed with the base ALTO protocol, performing as many ALTO request-response transactions as involved cost metrics or with a proposed extension called Multi-Cost ALTO currently proposed at the IETF by the inventors.

The Multi-criteria EP Ranking module **15** ranks the vectors of cost metric values returned by the ALTO server and corresponding to a plurality of AEPs. When the cost vector components are normalized in terms of value and physical meaning, each component is associated to a weight whose value impacts the final rank (or score or cost) computed for a given AEP. This ranking is preferably vector based.

The weight factors, specified in *AMW*_*Config*, are then applied to the obtained cost metrics values by the ALTO client **13** (link **21** in figure 1) from the ALTO server **2** for the different requested metrics, in function of the access network type of the user equipment. The weighted/adjusted cost metric values are subsequently communicated to the Multi-Criteria EP ranking module **15.**

The Multi-criteria EP Ranking module **15** performs the evaluation and ranking of the AEP with respect to the adjusted (i.e. weighted) cost metric values. Subsequently, the application service receiver **4** is provided with the requested application service by the selected AEP.

The AMW configuration module **12** specifies the possible values pointed by the AMW configurations (link **22** in figure 1) and when necessary updates the content of AMW metric weight factor database **112** (namely, the weight factors values and their and/or their timeframe) (link **23** in figure 1). Preferably, this configuration is done by the entity that administrates the candidate AEP gathering module **3,** such as the ISP as it knows the population in its domain of the different access types (i.e. the access network type such as WiFi, LAN, WLAN, 3GPP, Satellite) and their impact on the network conditions over time.

In one embodiment, the AMW configuration module **12** is a graphical User Interface (GUI) integrated in an end system able to access the AMW mapping module **11** integrated in a DNS Server. Further, this GUI may be configured to access the candidate AEP gathering module **3.**

In particular, the AMW configuration module **12** can:
- activate or deactivate ALTO when selecting AEPs,
- uploads to the AMW mapping module **11** updates of the metric weights and their weight factor or of the timeframe rules;
- retrieve from the serving ALTO server **2,** the set of supported ALTO metrics in numerical mode, by downloading the ALTO Information Resources Directory (IRD). To this end, the AMW configuration module **12** may directly download the IRD by a HTTP "GET directory" request on the ALTO Server URL (link **24** in figure 1) or include a simplified ALTO client;
- activate of deactivate the automation of ALTO metrics weight setting. In a manual selection mode: a person may set initial values for the metric weights and their weight factor.

This ALTO agent **14** is configured to know the semantics of ALTO and of the functions using ALTO information, and pass information and requests between the entities it is hooked therewith, namely the candidate AEP gathering module **3** the ALTO client **13,** the AMW module **11** and a Multi-criteria EP Ranking module **15.** The whole set of these latter elements connected via the ALTO agent **14** to the candidate AEP gathering module **3** is referred to as an "ALTO augmented candidate AEP gathering module".

In an illustrative embodiment, considering the case where the "ALTO ON", the "ALTO auto metric" and the "ALTO auto weight" modes are activated, through the AMW configuring module **12,** on the AMW mapping module **11,** and that an user equipment **4** (which is also the receiver of the requested application service) requests a video streaming application.

Subsequently, the candidate AEP gathering module **3** gathers three candidate AEPs able to serve the application service request (i.e. video streaming) and returns, for every downloaded chunk, the IP addresses (@IP1, @IP2, @IP3 or any other distinctive identifier) of these eligible AEPs (i.e. three video streaming servers operated using TCP as a transport protocol).

The ALTO agent **14** retrieves the output of the candidate AEP gathering module **3** (namely, the IP addresses of the candidate AEPs @IP1, @IP2, @IP3) to the Multi-Cost ALTO Client system **1.**

The AMW mapping module **11** maps the address of the UE **4** to the access network type (for example, whether WiFi, cellular communication, or LAN). Advantageously, the ISP can easily recognize that the address IP of the UE **4** is that, for example, of a WiFi access point. This mapping is reported in the look-up table **111.** For instance, the weight factor for the metric "bandwidth cost" at this time (according to the timeframe) is set to double the influence of bandwidth which is weaker during low traffic hours.

The look-up table **111** of the AMW mapping module **11** maps the three AEPs to class "{@IP}_1" pointing to "AMM_config_1" and read the applicable metric configuration for "{@IP}_1". AMM_config_1 points at this time to the value stored in the active ALTO configuration and equal to: "{(routing_cost, numerical), (bandwidth_cost, numerical)}", which both are cost metrics supported by the Serving ALTO Server **2.** In this scenario, during low peak hours, the pointed value is equal to "{(routing_cost, numerical)", because the AMW metric weight factor database **112** stores a schedule (i.e. a timeframe) for the pointed values. The schedule for the pointed values, and the ALTO metric configuration updates are uploaded to the AMM ALTO metric configuration database **112** via the AMW configuration module **12.**

The outputted metric information from the look-up table **111** is passed to the ALTO client **13** via the ALTO agent **14** as one of the ALTO request parameters. Accordingly, the ALTO client **13** retrieves, from the ALTO server **2,** ALTO information concerning @IP1, @IP2 and @IP3.

The weight information from the AMW mapping module **11** is communicated to the Multi-Criteria EP ranking module **15** as one of its input parameters (This weight information is not needed for the ALTO transaction (i.e. the ALTO request) between the ALTO client **13** and the ALTO server **2**.). The cost metric values are adjusted (multiplied) by their corresponding cost metric weight factors.

The value of a cost metric weight factor may be set depending on at least the following parameters:
- the access capabilities of the Application resources Consuming User Equipment (ACUE);
- the device capabilities of the ACUE (for instance, mobile phones that have limited displaying capabilities, and consequently have less needs in bandwidth); and optionally
- the time.

The candidate AEPs @IP1, @IP2 and @IP3 are then ranked, by the multi-criteria EP ranking module **15,** with respect to the values of:
- multiple metrics selected upon looking-up the AMW module **11** and provided by the ALTO server **2.** These cost metrics may be time-dependent according to a predefined applicable timeframe;
- the metric weights adjusted with respect to the access type of the UE **4.** These metric weights may be time-dependent according to a predefined applicable timeframe.

The ALTO agent **14** gets the ranking result (such as @IP3, @IP1, @IP1) and hands back to the candidate AEP gathering module **3** (such as a DNS Server) a list of IP addresses ordered with respect to the setting of the AMW mapping module **11.** An AEP choice, among the ordered list of AEPs, is made by the candidate AEP gathering module **3** and selected to provide the UE **4** with the requested video streaming.

Advantageously, it results in an automated metric weight setting for multi-cost ALTO queries while implementing an end-user centered decision mechanism integrated on the ALTO client side and automatically adapting the influence of the already chosen AEP selection metrics. The influence of these cost metrics is tuned through a multiplying factor of the weight value attached to each cost metric.

In one embodiment, a weight value tuning comprising the application of a multiplication factor to each weight is provided. For robustness and modularity purposes, the rationale is to "decrease the influence by a factor of N", rather than directly setting a new weight value. A major reason is that there may already exist a weight value set with respect to other considerations such as AEP conditions or QoE needs and the AMW mapping module **11** does not want to cancel these prior decisions.

Advantageously, the access network type of the user equipment to which the application service is addressed (namely, the application service receiver) may be automatically identified via its IP address thanks to the fact the candidate AEP gathering module **3** has ISP information linking its IP address to a given access technology type (i.e. the access network type).

Advantageously, the metric weight factor is set and updated with respect to the application requirements in QoE and with respect to time. For instance, a video downloading application may, in general, require AEP selection based on two metrics that are "routing cost" and "bandwidth score" with equal weights. During low traffic hours, the influence of "bandwidth score" may be lessened by decreasing its multiplying factor.

It is to be noted that application service providers (ASPs), such as CDN, may privilege their constraints and interests while selecting the appropriate AEPs (i.e. application servers), sometimes at the expenses of transport network providers and end-users. Using ALTO may allow to share routing cost information with ISPs and to reduce them. In exchange, ISP may guide, thanks to the above-described embodiments, ASPs with respect to QoE impacting metrics which results in better application performance and customer satisfaction, harmonizing thus the interests of the three parties (ASPs, ISPs, and end-users).

In one embodiment, the multi-cost ALTO client system 1 is integrated in an ISP DNS Server following known integration schemes in the prior art (I. Poese et al., "Improving Content delivery with PaDIS", Internet Computing, May-June 2012, vol. 16 no. 3, pp 46-52).

It is worth noting that the above-described embodiments are applicable to a basic ALTO client and focuses on a multi-cost capable ALTO client supporting both the basic and multi-cost ALTO protocol. Multi-criteria AEP ranking requires ALTO transactions (i.e. request and response) to get the cost of an AEP with respect to a set of metrics that are suitable for this endpoint and the application. With the basic ALTO protocol, as many ALTO transactions as metrics are needed. With the Multi-Cost ALTO extension proposal, only one is needed, unless the ALTO supports less metrics in a response as required by a multi-cost ALTO Client. Multi-Cost ALTO transactions are particularly advantageous for ALTO Client integrated in a DNS resolver or an authoritative DNS Server, given the number of requests they have to process.

Advantageously, the above-described method and system is interesting for ISPs that simultaneously have the knowledge to fill a UE to access network type look-up table and need to save their costs, resources and keep their customers.

Advantageously, Automation of metric weight selection, which is not feasible via the ALTO service, is a useful add-on to automate metric selection as it takes into account the network conditions and the access technology and device capabilities of the end-user equipments that receives the application data.

## Claims

1. A system for selecting an application endpoint to provide an application service receiver (4) with an application service, this system comprising a look-up table (111) configured for mapping an addressing identifier of the application service receiver to an access network type, said access network type pointing to a configuration of at least a metric weight factor, said metric weight factor being associated to an Application-Layer Traffic Optimization cost metric; **characterized by** comprising an Application-Layer Traffic Optimization client (13) configured for requesting from an Application-Layer Traffic Optimization server (2) the value of the Application-Layer Traffic Optimization cost metric and applying said metric weight factor to said value.

2. The system of claim 1, further comprising a multi-criteria endpoint ranking module (15) configured for selecting an application endpoint with respect to the adjusted cost metric values.

3. The system of any of the preceding claims, further comprising a configuration module (12) configured to specify the weight factor value of the metric weight factor and the Application-Layer Traffic Optimization cost metric to which is associated the metric weight factor.

4. The system of claim 3, wherein the configuration module (12) is further configured to retrieve, from the Application-Layer Traffic Optimization server (2), the set of the supported Application-Layer Traffic Optimization metrics by this said Application-Layer Traffic Optimization server (2).

5. The system of any of the preceding claims, further comprising a database (112) configured for storing the weight factor value of the metric weight factor and the Application-Layer Traffic Optimization cost metric to which is associated the metric weight factor.

6. The system of claim 5, wherein the database (112) is further configured for storing the applicable timeframe of the said weight factor value.

7. The system of any of the preceding claims, further comprising a candidate application endpoint gathering module (3) configured for gathering candidate application endpoints, said candidate application endpoints providing the application service to the said application service receiver.

8. The system of claim 7, wherein the candidate application gathering module (3) is a DNS resolver.

9. The system of any of the preceding claims, wherein the access network type includes Wireless-Fidelity type, 3GPP type, Local area network type, satellite type.

10. A method for selecting an application endpoint to provide an application service receiver (4) with an application service, this method comprising a mapping step of an addressing identifier of the application service receiver to an access network type, said access network type pointing to a configuration of at least a metric weight factor, said metric weight factor being associated to an Application-Layer Traffic Optimization cost metric and further comprising a specification step of the weight factor value of the metric weight factor and of the Application-Layer Traffic Optimization cost metric to which is associated the metric weight factor, **characterized by** the following further steps, executed by an Application-Layer Traffic Optimization client (13):
requesting from an Application-Layer Traffic Optimization server (2) the value of the Application-Layer Traffic Optimization cost metric and applying said metric weight factor to the value of said Application-Layer Traffic Optimization cost metric.

## Patentansprüche

1. System zum Auswählen eines Anwendungsendpunktes zum Bereitstellen einer Anwendungsdienstleistung für einen Anwendungsdienstleistungsempfänger (4), wobei dieses System eine Lookup-Tabelle (111) umfasst, die konfiguriert ist zum Abbilden einer Adresskennung des Anwendungsdienstleistungsempfängers auf einen Netzwerkzugangstyp, wobei der besagte Zugangsnetzwerktyp eine Konfiguration von mindestens einem metrischen Gewichtsfaktor angibt und der besagte metrische Gewichtsfaktor assoziiert ist mit einer Kostenmetrik für die Verkehrsoptimierung einer Anwendungsschicht; **dadurch gekennzeichnet, dass** ein Verkehrsoptimisierungskunde (13) einer Anwendungsschicht umfasst wird, der konfiguriert ist zum Anfordern des Wertes der Kostenmetrik für die Verkehrsoptimierung der Anwendungsschicht von einem Verkehrsoptimierungsserver (2) einer Anwendungsschicht und zum Anwenden des besagten metrischen Gewichtsfaktors auf den besagten Wert.

2. System nach Anspruch 1, weiterhin umfassend ein Multi-Kriteriums-Endpunktrangmodul (15), das konfiguriert ist zum Auswählen eines Anwendungsendpunkt in Bezug auf die eingestellten Kostenmetrikwerte.

3. System nach einem beliebigen der vorstehenden Ansprüche, weiterhin umfassend ein Konfigurationsmodul (12), das konfiguriert ist zum Spezifizieren des Gewichtsfaktorwertes des metrischen Gewichtsfaktors und der Kostenmetrik für die Verkehrsoptimierung der Anwendungsschicht, mit der der metrische Gewichtsfaktor assoziiert ist.

4. System nach Anspruch 3, wobei das Konfigurationsmodul (12) weiterhin konfiguriert ist zum Empfangen, von dem Verkehrsoptimierungsserver der Anwendungsschicht (2), des Satzes der unterstützten Verkehrsoptimierungsmetriken der Anwendungsschicht seitens des besagten Verkehrsoptimierungsservers (2) der Anwendungsschicht.

5. System nach einem beliebigen der vorstehenden Ansprüche, weiterhin umfassend
eine Datenbank (112), die konfiguriert ist zum Speichern des Gewichtsfaktorwertes des metrischen Gewichtsfaktors und der Kostenmetrik für die Verkehrsoptimierung der Anwendungsschicht, mit der der metrische Gewichtsfaktor assoziiert ist.

6. System nach Anspruch 5, wobei die Datenbank (112) weiterhin konfiguriert ist zum Speichern des anwendbaren Zeitrahmens des besagten Gewichtsfaktorwertes.

7. System nach einem beliebigen der vorstehenden Ansprüche, weiterhin umfassend ein Sammelmodul (3) für Anwendungsendpunktkandidaten, das konfiguriert ist zum Sammeln von Anwendungsendpunktkandidaten, wobei die besagten Anwendungsendpunktkandidaten die Anwendungsdienstleistung für den besagten Anwendungsdienstleistungsempfänger bereitstellen.

8. System nach Anspruch 7, wobei das Sammelmodul für Anwendungsendpunktkandidaten (3) ein DNS-Resolver ist.

9. System nach einem beliebigen der vorstehenden Ansprüche, wobei der Zugangsnetzwerktyp die Typen Wireless-Fidelity, 3GPP, lokales Netzwerk und Satellit umfasst.

10. Verfahren zum Auswählen eines Anwendungsendpunktes zum Bereitstellen einer Anwendungsdienstleistung für einen Anwendungsdienstleistungsempfänger (4), wobei diese Verfahren umfasst einen Schritt für die Abbildung einer Adresskennung des Anwendungsdienstleistungsempfängers auf einen Zugangsnetzwerktyp, wobei der besagte Zugangsnetzwerktyp eine Konfiguration von mindestens einem metrischen Gewichtsfaktor angibt, wobei der besagte metrische Gewichtsfaktor mit einer Kostenmetrik für die Verkehrsoptimierung einer Anwendungsschicht assoziiert ist, und weiterhin umfassend einen Schritt für die Spezifizierung des Gewichtsfaktorwertes des metrischen Gewichtsfaktors und der Kostenmetrik für die Verkehrsoptimierung der Anwendungsschicht, mit der der metrische Gewichtsfaktor assoziiert ist, **dadurch gekennzeichnet, dass** die folgenden weiteren Schritte von einem Verkehrsoptimierungskunden (13) einer Anwendungsschicht durchgeführt werden:
- Anfordern von einem Verkehrsoptimierungsserver (2) einer Anwendungsschicht des Wertes der Kostenmetrik für die Verkehrsoptimierung der Anwendungsschicht und Anwenden des besagten metrischen Gewichtsfaktors auf den Wert der besagten Kostenmetrik für die Verkehrsoptimierung der Anwendungsschicht.

## Revendications

1. Système destiné à sélectionner un point terminal d'application afin de fournir un service d'application à un destinataire de service d'application (4), ce système comprenant une table de consultation (111) configurée pour mettre en correspondance un identifiant d'adressage du destinataire de service d'application avec un type de réseau d'accès, ledit type de réseau d'accès pointant vers une configuration d'au moins un facteur de pondération de métrique, ledit facteur de pondération de métrique étant associé à une métrique de coût d'optimisation du trafic à la couche application ; **caractérisé en ce qu'**il comprend un client d'optimisation du trafic à la couche application (13) configuré pour demander à un serveur d'optimisation du trafic à la couche application (2) la valeur de la métrique de coût d'optimisation du trafic à la couche application et appliquer ledit facteur de pondération de métrique à ladite valeur.

2. Système selon la revendication 1, comprenant en outre un module de classement de point terminal multicritères (15) configuré pour sélectionner un point terminal d'application en fonction des valeurs de métrique de coût ajustées.

3. Système selon l'une quelconque des revendications précédentes, comprenant en outre un module de configuration (12) configuré pour spécifier la valeur du facteur de pondération du facteur de pondération de métrique et de la métrique de coût d'optimisation du trafic à la couche application à laquelle est associé le facteur de pondération de métrique.

4. Système selon la revendication 3, dans lequel le module de configuration (12) est en outre configuré pour récupérer, depuis le serveur d'optimisation du trafic à la couche application (2), l'ensemble des métriques d'optimisation du trafic à la couche application prises en charge par ledit serveur d'optimisation du trafic à la couche application (2).

5. Système selon l'une quelconque des revendications précédentes, comprenant en outre une base de données (112) configurée pour stocker la valeur du facteur de pondération du facteur de pondération de métrique et de la métrique de coût d'optimisation du trafic à la couche application à laquelle est associé le facteur de pondération de métrique.

6. Système selon la revendication 5, dans lequel la base de données (112) est en outre configurée pour stocker le délai imparti à ladite valeur du facteur de pondération.

7. Système selon l'une quelconque des revendications précédentes, comprenant en outre un module de collecte de points terminaux d'application candidate (3) configuré pour collecter les points terminaux d'application candidate, lesdits points terminaux d'application candidate fournissant le service d'application audit destinataire de service d'application.

8. Système selon la revendication 7, dans lequel le module de collecte d'application candidate (3) est un résolveur DNS.

9. Système selon l'une quelconque des revendications précédentes, dans lequel le type de réseau d'accès inclut un type Wireless-Fidelity, un type 3GPP, un type réseau local, un type satellite.

10. Procédé destiné à sélectionner un point terminal d'application afin de fournir un service d'application à un destinataire de service d'application (4), ce procédé comprenant une étape de mise en correspondance d'un identifiant d'adressage du destinataire de service d'application avec un type de réseau d'accès, ledit type de réseau d'accès pointant vers une configuration d'au moins un facteur de pondération de métrique, ledit facteur de pondération de métrique étant associé à une métrique de coût d'optimisation du trafic à la couche application et comprenant en outre une étape de spécification de la valeur du facteur de pondération du facteur de pondération de métrique et de la métrique de coût d'optimisation du trafic à la couche application à laquelle est associé le facteur de pondération de métrique, **caractérisé par** les autres étapes suivantes, exécutées par un client d'optimisation du trafic à la couche application (13) :
demander à un serveur d'optimisation du trafic à la couche application (2) la valeur de la métrique de coût d'optimisation du trafic à la couche application et appliquer ledit facteur de pondération de métrique à la valeur de ladite métrique de coût d'optimisation du trafic à la couche application.
